Europäisches Patentamt

European Patent Office

Office européen des brevets

(11) Veröffentlichungsnummer: **0 253 107**
**A1**

(12) **EUROPÄISCHE PATENTANMELDUNG**

(21) Anmeldenummer: **87107632.9**

(22) Anmeldetag: **26.05.87**

(51) Int. Cl.⁴ **F16H 3/00 , F16H 5/40**

(30) Priorität: **17.07.86 DE 3624129**

(43) Veröffentlichungstag der Anmeldung:
**20.01.88 Patentblatt 88/03**

(84) Benannte Vertragsstaaten:
**AT BE CH DE ES FR GB IT LI NL SE**

(71) Anmelder: **Heidolph-Elektro GmbH & Co. KG**
**Starenstrasse 23**
**D-8420 Kelheim/Donau(DE)**

(72) Erfinder: **Vollgold, Günter**
**Veit-Stoss-Str. 10**
**D-8540 Schwabach(DE)**
Erfinder: **Riehl, Günther**
**Am Kohlenschacht 22b**
**D-8403 Bad Abbach(DE)**
Erfinder: **Zinsser, Rudolf, Dr.**
**Haus Maria Fels**
**D-8420 Kelheim(DE)**

(74) Vertreter: **Göbel, Matthias, Dipl.-Ing.**
**Pruppacher Hauptstrasse 5-7**
**D-8501 Pyrbaum-Pruppach(DE)**

(54) **Getriebe, insbesondere für Kleinantriebe.**

(57) Bei einem Getriebe, insbesondere für Kleinantriebe, z.B. für Laborrührer mit einer durch einen Motor drehbaren Antriebswelle und einer Abtriebswelle mit zwei unterschiedlichen Drehzahlen ist zu einfachen und fernbedienbaren Drehzahländerungen die Antriebswelle (17) wahlweise in der einen und in der anderen Drehrichtung umschaltbar. Weiter dreht die Antriebswelle (17) ein Antriebsritzel (6), das gleichzeitig permanent mit einem ersten in einer Drehrichtung mit der Abtriebswelle (7) koppelbaren Getrieberad (8) und über ein Zwischenrad bzw. einem gleichzeitig und gleichsinnig drehbar ausgebildeten Zwischenräderpaar (12, 13) mit einem zweiten in der anderen Drehrichtung mit abweichender Unter- oder Übersetzung mit der Abtriebswelle (7) koppelbaren Getrieberad (9) in Eingriff ist.

Fig. 1

## Getriebe, insbesondere für Kleinantriebe

Die Erfindung betrifft ein Getriebe, insbesondere für Kleinantriebe, z.B. für Laborrührer, mit einer durch einen Motor drehbaren Antriebswelle und einer An-Abtriebswelle mit zwei unterschiedlichen Drehzahlen.

Bei Getrieben dieser Art ist es bekannt, Übersetzungsänderungen für die Abtriebswelle mechanisch, z.B. vermittels über Schalthebel betätigbare Schieberäder vorzunehmen. Abgesehen davon, daß die bei diesen Getrieben erforderliche Mechanik zu einem hohen Fertigungsaufwand führt, bereitet die Fernbedienbarkeit der Getriebe Schwierigkeiten.

Es ist Aufgabe der Erfindung, bei zweistufigen Getrieben. Drehzahländerungen einfach zu erreichen und fernbedienbar zu machen.

Erfindungsgemäß ist hierzu vorgesehen, daß die Antriebswelle wahlweise in der einen und in der anderen Drehrichtung umschaltbar ist und ein Antriebsritzel dreht, das gleichzeitig permanent mit einem ersten in einer Drehrichtung mit der Abtriebswelle koppelbaren Getrieberad und über ein Zwischenrad bzw. einem gleichzeitig und gleichsinnig drehbar ausgebildeten Zwischenräderpaar mit einem zweiten in der anderen Drehrichtung mit abweichender Unter-oder Übersetzung mit der Abtriebswelle koppelbaren Getrieberad in Eingriff ist. Vorzugsweise ist das mit dem Antriebsritzel kämmende Getrieberad über eine in einer Drehrichtung wirksamen Freilaufkupplung und das mit dem Zwischenrad bzw. Zwischenräderpaar kämmende Getrieberad über eine in der anderen Drehrichtung wirksamen Freilaufkupplung mit der Abtriebswelle koppelbar. Es versteht sich, daß die Freilaufkupplungen beliebig, z.B. als Zahn-oder Klemmrichtgesperre ausgebildet sein können. Auf diese Weise ist durch eine Drehrichtungsumkehr der Antriebswelle die Wahl einer von zwei Drehzahlen für die Abtriebswelle möglich. Wird in Ausgestaltung des Getriebes die Antriebswelle durch die Motorwelle gebildet, bzw. ist die Antriebswelle durch ein flexibles Kraftübertragungsorgan mit der Motorwelle verbunden, so ist durch einfache Drehrichtungsumkehr des Antriebsmotors die eine oder andere Drehzahl für die Abtriebswelle erreichbar. Abgesehen davon, daß das Getriebe in seinem Aufbau einfach ist und einen kleinen wirtschaftlichen Aufwand erfordert, ist durch den Fortfall mechanischer Betätigungsmittel eine kompakte Baueinheit mit geringem Verschleiß geschaffen. Schließlich ist die Ansteuerung des Getriebes über Kleinrechner möglich, die zu Drehzahländerungen weder Servo-Motoren noch Stellungsindikatoren notwendig macht.

In Abwandlung des Erfindungsgedankens ist vorgesehen, daß die Antriebswelle wahlweise in der einen und in der anderen Drehrichtung umschaltbar ist und ein Antriebs ritzel dreht, das permanent mit einem Zwischenrad bzw. einem gleichzeitig gleichsinnig drehbaren Zwischenräderpaar kämmt und gemeinsam mit dem Zwischenrad bzw. Zwischenräderpaar auf einer Schwinge angeordnet ist und daß mittels der Schwinge das Antriebsritzel entweder unmittelbar mit einem auf der Abtriebswelle fest angeordneten Getrieberad oder mittelbar über das Zwischenrad bzw. das Zwischenräderpaar mit einem auf der Abtriebswelle fest angeordneten zweiten Getrieberad mit abweichender Unter-oder Übersetzung in Eingriff bringbar ist. Beim so gebildeten Getriebe bedarf es zu Drehzahländerungen an der Abtriebswelle der Drehrichtungsumkehr der Antriebswelle und einer Schwenkbewegung der Schwinge. Eine Vereinfachung dieses Getriebes läßt sich dann erreichen, wenn die Schwinge bei Drehrichtungsumkehr der Antriebswelle gleichzeitig selbständig aus der einen in die andere Eingriffstellung schwenkbar ist.

Die Erfindung ist anhand eines Ausführungsbeispiels in der Zeichnung verdeutlicht. Es zeigen:

Fig. I eine Getriebe im Schnitt und

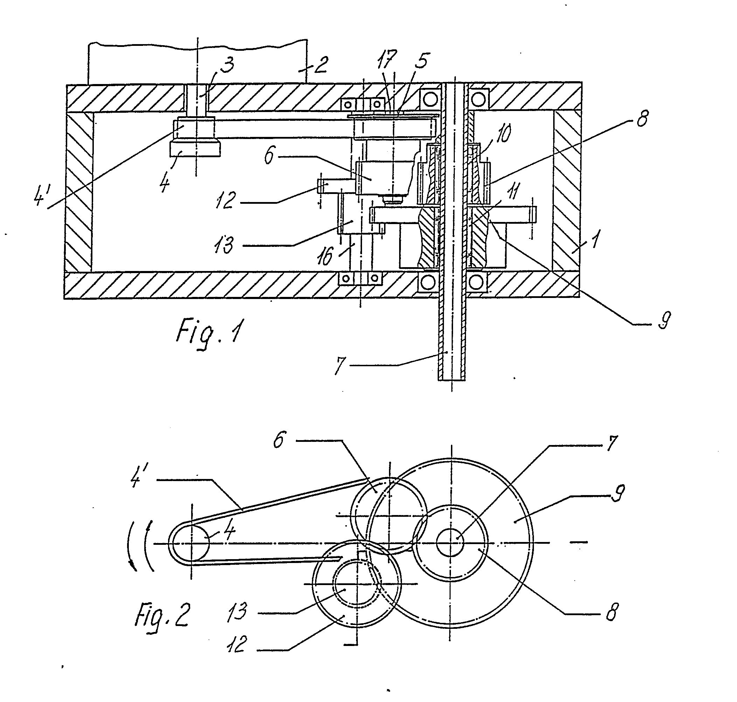

Fig. 2 eine schematische Darstellung der Getrieberäder in Draufsicht.

In den Fig. ist mit I ein Getriebegehäuse bezeichnet, das einen Elektromotor 2 trägt. Die Welle 3 des Elektromotors 2 weist eine Antriebsscheibe 4 drehfest auf, die über ein flexibles Kraftübertragungsorgan 4' eine weitere Antriebsscheibe 5 und eine Antriebswelle I7 dreht. Mit der Antriebsscheibe 5 ist ein Antriebsritzel 6 drehfest verbunden. Mit 7 ist die Abtriebswelle des Getriebes bezeichnet. Die Abtriebswelle 7 trägt ein Getrieberad 8 und ein Getrieberad 9. Die beiden GEtrieberäder 8 und 9 sind vermittels gegensinnig wirksam werdenden Freilaufkupplungen I0 und II entsprechend der Drehrichtung mit der Abtriebswelle 7 koppelbar Mit dem Getrieberad 8 steht das Antriebsritzel 6 unmittelbar permanent im Eingriff. Weiter kämmt das Antriebsritzel 6 ein auf einer gemeinsamen Welle I6 angeordnetes Zwischenräderpaar I2 und I3, das mit dem Getrieberad 9 permanent in Eingriff steht.

Bei Umlaufen des Antriebsritzels 6 werden somit das Getrieberad 8 und über das Zwischenräderpaar I2, I3, das Getrieberad 9 gedreht. Entsprechend der Umlaufrichtung des Antriebsritzels 6 wird in der einen Drehrichtung desselben über die Freilaufkupplung I0 bzw. II durch das Getrieberad 8 bzw. Getrieberad 9 die Abtriebswelle 7 in der einen oder anderen Drehrichtung gedreht, wobei das Zwischenräderpaar l2, l3 und der gewählte Durchmesser des Getrieberades 9 zu einer verschieden großen Drehzahl verhilft. Die Freilaufkupplungen l0 bzw. ll können in beliebiger Weise, z.B. als Zahn-oder Klemmrichtgesperre ausgebildet sein.

Beim Ausführungsbeispiel ist das Antriebsritzel 6 und das Getrieberad 8 mit gleicher Durchmessergröße ausgeführt, wodurch gleiche Drehzahlen für Antriebsritzel 6 und Abtriebswelle 7 erreicht werden. Die Verwendung von Untersetzungsstufen zwischen dem Antriebsritzel 6 und dem Zwischenräderpaar l2, l3 bzw. dem Zwischenräderpaar l2, l3 und dem Getrieberad 9 erbringt eine Untersetzung der Drehzahl. Die Abtriebswelle 7 behält in beiden Drehrichtungen des Antriebsritzels 6 die gleiche Umlaufrichtung bei.

Es versteht sich, daß das Antriebsritzel 6 und das Zwischenräderpaar l2, l3 auch auf einer Schwinge aufgesetzt sein können und die Getrieberäder 8, 9 durch wahlweises Anlegen des Antriebsritzels 6 an das Getrieberad bzw. des Zwischenräderpaars l2, l3 an das Getrieberad 9 die Antriebswelle 7 bei Drehrichtungsänderung des Antriebsritzels 6 unterschiedlich große Drehzahlen auszuführen vermag. Es besteht die Möglichkeit mit der Drehrichtungsumkehr des Antriebsritzels 6 bzw. des Antriebsmotors l2 gleichzeitig selbständig die Abschwenkungen der Schwinge zu bewirken.

## Ansprüche

l. Getriebe, insbesondere für Kleinantriebe, z.B. für Laborrührer mit einer durch einen Motor drehbaren Antriebswelle und einer Abtriebswelle mit zwei unterschiedlichen Drehzahlen, dadurch gekennzeichnet, daß die Antriebswelle (l7) wahlweise in der einen und in der anderen Drehrichtung umschaltbar ist und ein Antriebsritzel (6) dreht, das gleichzeitig permanent mit einem ersten in einer Drehrichtung mit der Abtriebswelle (7) koppelbaren Getrieberad (8) und über ein Zwischenrad bzw.einem gleichzeitig und gleichsinnig drehbar ausgebildeten Zwischenräderpaar (l2, l3) mit einem zweiten in der anderen Drehrichtung mit abweichender Unter-oder Übersetzung mit der Abtriebswelle (7) koppelbaren Getrieberad (9) in Eingriff ist.

2. Getriebe nach Anspruch l, dadurch gekennzeichnet, daß das mit dem Antriebsritzel (6) kämmende Getrieberad (8) über eine in einer Drehrichtung wirksamen Freilaufkupplung (l0) und das mit dem Zwischenrad bzw. Zwischenräderpaar (l2, l3) kämmende Getrieberad (9) über eine in der anderen Drehrichtung wirksamen Freilaufkupplung (ll) mit der Abtriebswelle (7) koppelbar sind.

3. Getriebe nach Anspruch 2, dadurch gekennzeichnet, daß die Freilaufkupplungen (l0, ll) als Zahn-oder Klemmrechtgesperren ausgebildet sind.

4. Getriebe nach Anspruch l, dadurch gekennzeichnet, daß die Antriebswelle (l7) durch die Motorwelle gebildet ist.

5. Getriebe nach Anspruch l, dadurch gekennzeichnet, daß die Antriebswelle (l7) durch ein flexibles Kraftübertragungsorgan (4') mit der Motorwelle (3) verbunden ist.

6. Getriebe, insbesondere für Kleinantriebe, z.B. für Laborrührer mit einer durch einen Motor drehbaren Antriebswelle und einer Abtriebswelle mit zwei unterschiedlichen Drehzahlen, dadurch gekennzeichnet, daß die Antriebswelle (l7) wahlweise in der einen und in der anderen Drehrichtung umschaltbar ist und ein Antriebsritzel (6) dreht, das permanent mit einem Zwischenrad bzw. einem gleichzeitig gleichsinnig drehbaren Zwischenräderpaar(l2,l3) kämmt und gemeinsam mit dem Zwischenrad bzw. Zwischenräderpaar (l2, l3) auf einer Schwinge angeordnet ist und daß mittels der Schwinge das Antriebsritzel (6) unmittelbar mit einem auf der Abtriebswelle (7) fest angeordneten Getrieberad (8) oder mittelbar über das Zwischenrad bzw. das Zwischenräderpaar (l2, l3) mit einem auf der Abtriebswelle (7) fest angeordneten zweiten Getrieberad (9) mit abweichender Unter-oder Übersetzung in Eingriff bringbar ist.

7. Getriebe nach Anspruch 6, dadurch gekennzeichnet, daß die Schwinge bei Drehrichtungsumkehr der Antriebswelle (l7) selbständig aus der einen in die andere Eingriffstellung abschwenkbar ist.

**Fig. 1**

**Fig. 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 211 087 (THOMSON-CSF) <br> * Seiten 5-6; Figur 7 * | 1-4 | F 16 H 3/00 <br> F 16 H 5/40 |
| | --- | | |
| X | DE-B-1 286 362 (HEINKEL) <br> * Spalten 1-2; Figuren * | 1-3,5 | |
| | --- | | |
| X | EP-A-0 173 853 (OKI) <br> * Seiten 5-6; Figur 1 * | 1,6,7 | |
| | --- | | |
| X | DE-C- 890 592 (SCHOPPE) <br> * Seite 2; Figuren 1-2 * | 1,6,7 | |
| | ----- | | |

|  | RECHERCHIERTE SACHGEBIETE (Int. Cl.4) |
|---|---|
| | F 16 H 3/00 |

Der vorliegende Recherchenbericht wurde für alle Patentansprüche erstellt.

| Recherchenort | Abschlußdatum der Recherche | Prüfer |
|---|---|---|
| DEN HAAG | 09-10-1987 | FLORES E. |